# EUROPEAN PATENT APPLICATION

(11) **EP 1 119 164 A2**
(43) Date of publication of application: **25.07.2001**
(21) Application number: 01300435.3
(22) Date of filing: 18.01.2001
(51) Int. Cl.: H04M 3/30, H04M 1/00

(54) **Signal Monitoring**

(30) Priority: 18.01.2000 GB 0001146; 14.08.2000 GB 0019984
(71) Applicant: CHESILVALE ELECTRONICS LIMITED, Newport, Gwent NP9 2NN (GB)
(72) Inventor: Govier, Mark, Cardiff, Glamorgan CF3 4AS (GB); Kaine, Paul, St. Arvans NP16 6DZ (GB); Rousse, Olivier, Bradley Stoke,istol BS32 8AH (GB)
(74) Representative: Stuart, Ian Alexander

(57) **Abstract**

The functions of a test telephone are implemented using a computer (212). This may be remote from a telephone wire or other signal carrier. Signal analysing circuitry (200) is coupled to the carrier for analysing the signal on the carrier (e.g. for the presence of digital signals or high voltages) and/or carrying out tests. Data from the circuitry (200) are transmitted to the computer.

## Description

The present invention concerns apparatus and methods for the monitoring of signals. It is particularly concerned with the monitoring of signals having both audio frequency and/or other analogue components, and components of a different character, e.g. out-of-band components, digital components and high voltage components. (These categories are not mutually exclusive). It is mainly concerned with signals transmitted over conductors, e.g. telephone lines.

An engineer typically monitors a line by connecting a test telephone and listening for an audio signal. If he hears nothing he may assume that there is no signal there. However a simple test telephone might not reveal the presence of signals other than audio signals. Thus the engineer might work on a line, unaware that he is disrupting non-audio signals such as digital traffic.

Telephone lines sometimes carry high voltages, e.g. for powering active circuits in a local distribution network. This can lead to damage to a test telephone, and possibly to injury to the engineer.

There are now some more sophisticated test telephones which can provide detection of some non-audio signals, particularly digital signals. For example, Chesilvale Electronics Ltd produces a range of test telephones under the trademark DIGALERT.

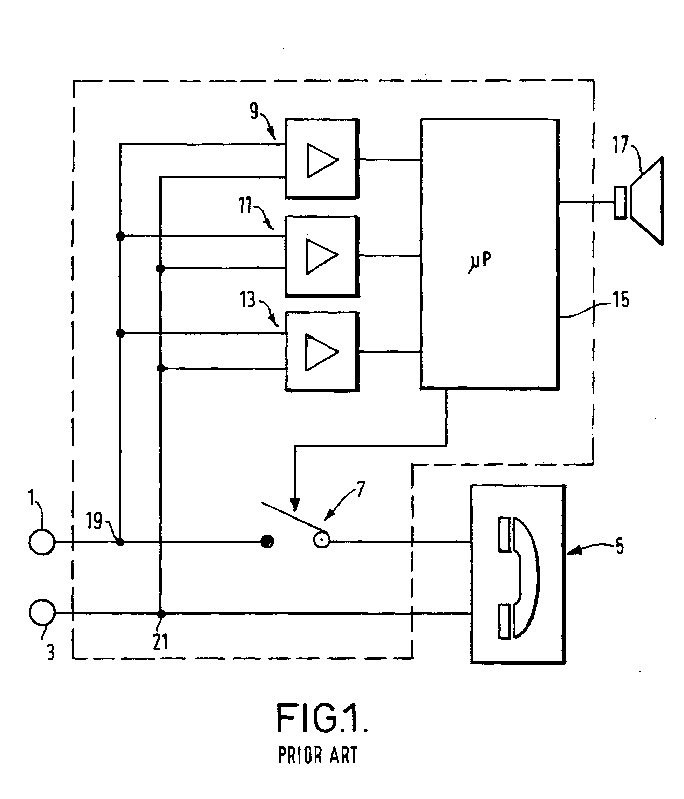

Fig 1 is a schematic circuit diagram of the DIGALERT 360 test telephone. It has input terminals 1, 3 for connection to a line to be tested. The terminals 1, 3 are connected to telephone circuitry 5 via a switch 7. Normally the switch is open (the telephone is on-hook). The impedance of the switch 7 is then so great that the circuitry 5 is not exposed to voltages between the input terminals 1, 3. However, when the switch 7 is closed (the telephone is off-hook) the circuitry 5 is connected between the input terminals 1, 3. The telephone further includes a sensor 9 for detecting DC voltages between the input terminals 1, 3 above a first predetermined level. It also includes a sensor 11 for detecting that the DC voltage between the input terminals 1, 3 is below a second predetermined level. It further includes a digital signal detector 13 for detecting digital voltage signals between the terminals 1, 3. Upon the sensors 9, 11 detecting that the DC voltage is outside an acceptable range (i.e. there is an under-voltage or an overvoltage), or upon the digital signal detector 13 detecting that a digital signal is present between the input terminals 1, 3, a signal is transmitted to a microcontroller 15. The microcontroller 15 opens the switch 7 if it is closed and in any case prevents its closure-, so -that the telephone circuitry is electrically disconnected from the input terminals 1, 3. The microprocessor 15 further triggers the generation of an alarm tone by a sound generator 17 (which may or may not be the same as a sound generator of the telephone circuitry 5).

We have now appreciated that (a) the operation of monitoring a signal carrier can usefully employ a computer, particularly a personal computer ('PC') such as a Laptop or a palmtop; and (b) monitoring can be carried out remotely, e.g. using a wireless link.

Thus broadly, in one aspect, the invention arises from the realisation that a computer can be used for many of the functions of a conventional test telephone, particularly if the computer is portable. Thus the invention provides a system in which a computer is coupled to a data gathering means which is adapted to be coupled to a data carrier, particularly a telephone line. The data gathering means can gather data from the carrier and/or carry out tests, and can transmit data to the computer. In this aspect the invention provides a system comprising:
(a) signal analysing circuitry having an input for receiving a signal from a carrier, said circuitry being operable to detect the presence of a predetermined type or types of signal or other traffic, e.g. a non-audio component (e.g. a digital signal, an out of band signal or a high voltage); and
(b) a PC or other computer coupled to the signal analysing circuitry to receive an output therefrom.

The signal analysing circuitry may be arranged to output a signal only when it does not detect a signal or component of a predetermined type. Its output may be the signal as received from the carrier or a modified version thereof. Alternatively its output may be a control signal which is used to permit or prevent transmission of the carrier signal to the computer. The control signal may allow or disallow the computer, acting as a test telephone, from 'seizing' the line.

The signal analysing circuitry may be provided on an element such as a card that can be removably plugged into a port of the PC to effect said coupling. Alternatively it may be remote from the PC and coupled to it indirectly, e.g. via a radio link. Possible modes of coupling to the computer include USB, serial, PCMCIA, optical, IR, and wireless (e.g. RF or a cellular telephone system).

The signal analysing circuitry typically performs
(a) one or more measuring or testing operations (e.g. measuring the voltage on a telephone line or other carrier) and (b) one or more assessment steps in which data resulting from the measuring or testing operations are evaluated (e.g. to decide whether a measured voltage is too high and/or too low).

These two functions are generally implemented by different parts of the analysing circuitry, which may be physically separate. Function (b) may be implemented by software or firmware which may be operated by part of the computer. Thus, considering the example of testing for excessive voltage on a line, a first part of the signal analysing circuitry may measure the voltage. Information about this voltage is transmitted to a second part, which decides whether it is excessive. Both parts may be provided by the same physical unit, which may be remote from the computer. Alternatively the parts may be separate, in which case the first may be remote from the computer while the second is at, or provided by, the computer.

The system will usually include a loudspeaker or headset for rendering audible any audio component. This may be connected to the normal audio output coupling of the PC, or to an output coupling provided on the element bearing the signal analysing circuitry. Likewise there may be a microphone, so that the system can be used as a telephone for communicating over the carrier. This too may be provided on the PC or connected to the element, e.g. as part of a generally conventional handset.

In a second aspect, broadly, the invention relates to the use of a wireless link for transmitting data from a data gathering or testing device which is coupled to a data carrier, to a monitoring device which may be a test telephone or a computer.

Thus we may provide a system comprising:
(a) A monitoring device, e.g. a computer;
(b) Wireless receiver means coupled to the device to provide an input thereto, said receiver means being adapted to receive a data-carrying wireless signal and to derive data therefrom to provide a said input;
(c) Remote data gathering and wireless transmitting means adapted to be coupled to a data carrier (particularly a telephone line, which may be elevated e.g. by means of telegraph poles, or buried) and adapted to derive data from the carrier and transmit it to the receiver.

The remote data gathering means may be adapted to perform a test on the data carrier (or on the signal carried thereby). For example, it may be operable to detect the presence of a predetermined type or types of signal or other traffic (e.g. a non-audio component such as a digital signal, an out-of-band signal or a high voltage). Thus the data transmitted to the receiver means may comprise test data. These may be "raw" data such as the result of a measurement of voltage, to be assessed after transmission. Alternatively the remote device may be adapted to carry out the assessment. It may then transmit data relating to the result of the assessment and/or the result may be used to determine what other data are transmitted.

The data transmitted to the receiver means may comprise all or part of a signal carried by the carrier.

Such transmission may be enabled by the result of an assessment as referred to above. If the assessment is carried out at the computer or receiver, then the computer or receiver will send an enabling signal to the remote device, if the assessment justifies this. The computer may supply all or some of the functions of a conventional test telephone.

An embodiment of the invention may embody both of the above aspects.

In another aspect the invention provides a method of monitoring a signal on a carrier using a system as described above.

Some embodiments of the invention will now be described by way of example with reference to the accompanying- drawings in which:
Fig 1 is a schematic circuit diagram of a known test telephone;
Fig 2 is a schematic diagram of an embodiment of the invention; and
Fig 3 is a schematic diagram of a second embodiment which employs a radio link.

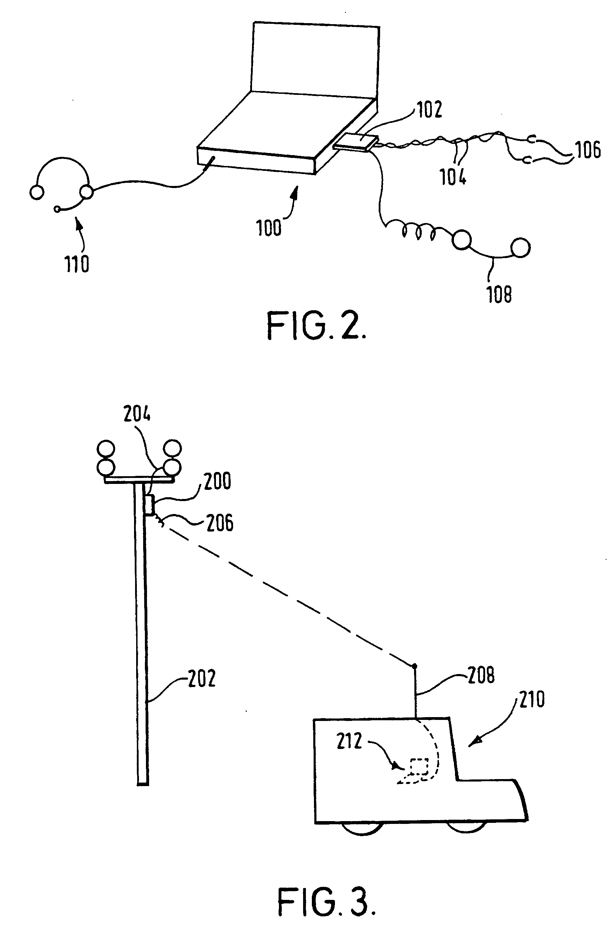

Referring to Fig 2, this shows a laptop PC 100 having a card 102 plugged into a port. A pair of connectors 104 extend from the card 102. They terminate in clips 106 for connection to a pair of telephone wires.

Fig 2 shows two alternative ways of providing telephone functions. The card 102 may be coupled (or capable of being coupled) to a loudspeaker and microphone, e.g. provided by a telephone handset 108. The PC may be adapted to be coupled to a headset 110.

The card 102 may have circuitry corresponding to all or part of that shown within the box 120 in Fig 1, the terminals 1, 3 of Fig 1 corresponding to the connection 104 of Fig 2.

Of course, once the computer 100 is coupled to a telephone line, it can be used to carry out a variety of operations including performing tests on the line, analysing and/or displaying data received from the line, and transmitting and receiving data in various formats.

Fig 3 shows an alternative mode of coupling the analysing circuitry to the PC. In this case the circuitry (or part thereof) is mounted in a box 200 fixed to a telegraph pole 202. Leads 204 couple a telephone line to the circuitry. The output of the circuitry is transmitted from an aerial 206 as an RF (or other wireless) signal. This is receivable by a receiving aerial 208 which may be mounted on a van 210 housing a PC 212. The received signal may be fed into the computer via connector leads 104 and a card 102 generally as shown in Fig. 2 Some of the functions of the analysing circuitry may be realized by the card 102 and/or by the computer 212.

In the illustrated examples, a computer is used to provide telephone-type functions. Of course it may provide other functions as well or instead. For example it may be set up to handle digital signals, in which case the signal processing circuitry would not block the outputting of digital signals. The circuitry may include a digital modem.

## Claims

1. Signal monitoring apparatus comprising: (a) signal analysing circuitry having an input for receiving a signal from a carrier, said circuitry being operable to detect the presence of a predetermined type or types of signal or other traffic; and (b) a computer coupled to the signal analysing circuitry to receive an output therefrom.

2. Apparatus according to claim 1 wherein said signal analysing circuitry is adapted to receive as input a signal from a telephone line, and to analyze the signal for the presence of a non-audio component.

3. Apparatus according to claim 1 wherein said signal analysing circuitry is adapted to receive as input a signal from a telephone line, and to analyze the signal for the presence of a non-audio signal component which is one or more of a digital signal, an out-of-band signal, and a high voltage.

4. Apparatus according to any preceding claim wherein the signal analysing circuitry is arranged to provide an output only when it does not detect a signal or component of a predetermined type.

5. Apparatus according to any preceding claim wherein the output of the signal analysing circuitry comprises the signal as received from the carrier or a modified version thereof.

6. Apparatus according to any preceding claim wherein the computer has a port and at least part of the signal analysing circuitry is provided on an element that can be removably plugged into the port of the computer to effect said coupling.

7. Apparatus according to any of claims 1-6 wherein at least part of the signal analysing circuitry is spaced from the computer and coupled to it by a wireless data transmission link.

8. Apparatus according to claim 7 wherein said data transmission link is an optical, IrDA, RF or cellular telephone system link.

9. Apparatus according to any of claims 1-6 wherein at least part of the signal analysing circuitry is spaced from the computer and coupled to it by a cable link.

10. Apparatus according to claim 9 wherein said cable link is a USB, serial or PCMCIA link.

11. Apparatus according to any preceding claim which is for receiving a signal from a telephone line as said carrier, and wherein said computer has a headset and is arranged to provide telephone functions.

12. Apparatus according to any of claims 1-8 which is for receiving a signal from a telephone line as said carrier, and wherein said signal analysing circuitry is provided at least in part by an element that is removably plugged into a port of the computer, said element being coupled to a loud speaker and microphone and being arranged to provide telephone functions.

13. Apparatus according to any preceding claim wherein the computer is adapted to perform tests on the carrier.

14. A signal monitoring apparatus comprising: (a) a monitoring device; (b) wireless receiver means coupled to the device to provide an input thereto, said receiver means being adapted to receive a data-carrying wireless signal and to derive data therefrom to provide a said input; and (c) remote data gathering and wireless transmitting means adapted to be coupled to a data carrier and adapted to derive data from the carrier and transmit it to the receiver.

15. Apparatus according to claim 14 wherein the remote data gathering means is adapted to perform a test on the data carrier or on the signal carried thereby to generate test data, and wherein the data transmitted by said wireless transmitting means comprises said test data.

16. Apparatus according to claim 14 or 15 wherein the remote data gathering and wireless transmitting means are adapted to transmit to the receiver means data which comprise all or part of a signal carried by the carrier.

17. Apparatus according to claim 14, 15 or 16 wherein the monitoring device comprises a computer.
